# EUROPÄISCHE PATENTSCHRIFT

(11) **EP 4 108 570 B1**
(45) Veröffentlichungstag und Bekanntmachung des Hinweises auf die Patenterteilung: **13.11.2024**
(21) Anmeldenummer: 21181889.3
(22) Anmeldetag: 25.06.2021
(51) Int. Cl.: B64D 11/04, B64D 11/02

(54) **SYSTEM UND VERFAHREN ZUM AUFWÄRMEN VON WASSER FÜR EINE VERBRAUCHEREINHEIT IN EINEM FLUGZEUG**
SYSTEM AND METHOD FOR HEATING WATER FOR A CONSUMER UNIT IN AN AIRCRAFT
SYSTÈME ET PROCÉDÉ DE CHAUFFAGE DE L'EAU POUR UNE UNITÉ DE CONSOMMATEUR DANS UN AVION

(43) Veröffentlichungstag der Anmeldung: 28.12.2022
(73) Patentinhaber: Airbus Operations GmbH, 21129 Hamburg (DE)
(72) Erfinder: Rempe, Michael, 21129 Hamburg (DE); Albers, Frederik, 21129 Hamburg (DE); Schneider, Frank, 21129 Hamburg (DE); Schreiner, Axel, 21129 Hamburg (DE); Lübbert, Tim, 21129 Hamburg (DE)
(74) Vertreter: Bird & Bird LLP - Hamburg

(56) Entgegenhaltungen:
- CN-U- 212 222 694
- DE-A1- 3 836 523
- RU-C1- 2 719 044
- US-A1- 2016 176 526
- US-A1- 2019 367 189

## Beschreibung

Die vorliegende Erfindung betrifft ein System zum Aufwärmen von Wasser für eine Verbrauchereinheit im Flugzeug mit einem Wasserreservoir und einer Steuereinheit. Des Weiteren umfasst die Erfindung ein Verfahren zum Aufwärmen von Wasser für Verbrauchereinheit im Flugzeug sowie ein Flugzeug mit einem entsprechenden System. In Verbrauchereinheiten von Flugzeugen, wie beispielsweise Waschräumen oder der Bordküchen, sogenannten Galleys, wird an Waschbecken warmes Wasser bereitgestellt, das beispielsweise zum Waschen der Hände oder zum Abwaschen verwendet werden kann. Um warmes Wasser zu erzeugen, ist in der Nähe der Waschbecken ein lokales Wasserreservoir angeordnet, in dem Wasser aus einem zentralen Wassertank zwischengespeichert wird. Das Wasserreservoir umfasst ein Heizgerät, mit dem in dem Wasserreservoir vorgehaltenes Wasser auf eine Heißwassertemperatur von beispielsweise 60°C erwärmt wird. Die Heißwassertemperatur wird so gewählt, dass es in dem Wasserreservoir nicht zu einer nennenswerten Keimbildung und Keimansiedlung an dessen inneren Oberflächen kommt und somit negative Einflüsse auf die hygienische (Trink-)Wasserqualität zu vermeiden. Wenn warmes Wasser an dem Waschbecken entnommen werden wolle, wird das auf die Heißwassertemperatur erwärmte Wasser mit kaltem Wasser aus dem zentralen Wassertank vermischt, um es auf eine Verbrauchtemperatur abzukühlen, bei der keine Verbrühungen auftreten. Die gewünschte Verbrauchertemperatur kann der Nutzer des Waschbeckens teilweise mittels einer Mischbatterie einstellen. Ein solches System ist beispielsweise aus der DE 38 36 523 A1 bekannt.

Aus der US 2016/176526 A1 ist eine Brennstoffzelleneinheit für eine Bordküche bekannt, die das für Verbrauchereinheiten zur Verfügung gestellte Wasser im Wasserreservoir als Kühlkörper zur Kühlung der Brennstoffzelleneinheit verwendet, sodass das Wasser im Wasserreservoir vorgewärmt wird.

Aus der CN 212 222 694 U ist ein Notfallselbstzirkulations-Ozonwasserentkeimungsgerät bekannt, das einen beweglichen Gehäusekörper, eine Steuereinheit, ein Ozongeneratorsystem sowie ein Waschbecken, einen Hochtemperaturentkeimungstank, und einen Vorratstank für gereinigtes Wasser aufweist. Der Hochtemperaturentkeimungstank umfasst ein Heizelement, welches dazu dient, das Wasser zu erhitzen und dadurch zu entkeimen.

Weitere Wasserversorgungseinrichtungen mit Einrichtungen zum Desinfizieren sind beispielsweise aus der RU 2 719 044 C1, in der das Wasser durch UV-Licht desinfiziert wird, und der US 2019/367189 A1 bekannt, in der das Wassersystem durch Einleiten von feuchter Heißluft desinfiziert wird.

Vor diesem Hintergrund ist es eine Aufgabe der vorliegenden Erfindung ein verbessertes System zum Aufwärmen von Wasser für Verbraucheinheiten in Flugzeugen bereitzustellen. Diese Aufgabe wird gelöst durch ein System nach Anspruch 1, ein Verfahren gemäß Anspruch 8 sowie ein Flugzeug nach Anspruch 15. Bevorzugte Ausgestaltungen des Systems sowie des Verfahrens sind in den jeweiligen abhängigen Ansprüchen angegeben.

In einem ersten Aspekt wird die Aufgabe gelöst durch ein System zum Aufwärmen von Wasser für eine Verbrauchereinheit in einem Flugzeug, wobei das System ein Wasserreservoir und eine Steuereinheit umfasst. Das Wasserreservoir umfasst ein Heizgerät, dass dazu konfiguriert ist, in dem Wasserreservoir vorgehaltenes Wasser auf eine Verbrauchertemperatur zu erwärmen, so dass aus dem Wasserreservoir für die Verbrauchereinheit Wasser bei der Verbrauchertemperatur zur unmittelbaren Verwendung bereitgestellt werden kann, wobei insbesondere die Verbrauchertemperatur so gewählt wird, dass auf eine Mischbatterie verzichtet werden kann. Die Steuereinheit ist dazu konfiguriert, das Heizgerät so zu steuern, dass in dem Wasserreservoir vorgehaltenes Wasser automatisch auf eine Desinfektionstemperatur erwärmt wird, bei der eine Keimbildung und -ansiedlung im Wasserreservoir und an dessen inneren Oberflächen durch thermische Behandlung beseitigt oder unterdrückt wird, und eine Temperatur des Wassers in dem Wasserreservoir für einen Desinfektionszeitraum auf oder über der Desinfektionstemperatur gehalten wird, wobei die Erwärmung auf die Desinfektionstemperatur nur während Flugphasen oder Teilen von Flugphasen des Flugzeugs erfolgt, in denen die Verwendung der Verbrauchereinheit durch einen Nutzer nicht zu erwarten ist.

Mit anderen Worten betrifft die vorliegende Erfindung ein System, mit dem Wasser für Verbrauchereinheiten, wie beispielsweise Waschräumen, Bordküchen oder Duschen, in Flugzeugen erwärmt werden kann. Das System umfasst zunächst ein Wasserreservoir mit einem Heizgerät. Dieses Heizgerät dazu verwendet, um im Normalbetrieb Wasser auf eine Temperatur zu erwärmen, die beispielsweise zum Waschen von Händen und Gesicht, zum Duschen oder zum Abwaschen geeignet ist. Diese Wassertemperatur wird nachfolgend als Verbrauchertemperatur bezeichnet. Sie wird so gewählt, dass sich das Wasser für den Benutzer angenehm anfühlt und es auf keinen Fall zu Verbrühungen kommt. Indem Wasser direkt mit der Verbrauchertemperatur bereitgestellt wird, kann auf vorteilhafte Weise auf Mischbatterien und ähnliche Vorrichtungen verzichtet werden, sodass das Gewicht dieser zusätzlichen Ausrüstung gespart werden kann. Zudem wird Energie gespart, da Wasser nicht zunächst auf eine deutlich höhere Heißwassertemperatur bei höheren Wärmeverlusten erwärmt wird, nur um es im Anschluss wieder auf eine kühlere Verbrauchertemperatur abzukühlen.

Allerdings stellt sich bei einer Erwärmung des Wassers auf Verbrauchertemperatur das Problem, dass es zur Keimbildung und damit Verunreinigung des Wassers in dem Wasserreservoir und vor allem auch an den inneren Oberflächen des Wasserreservoirs kommen kann. Daher ist vorliegend vorgesehen, dass in dem Wasserreservoir vorgehaltenes Wasser zeitweise auf eine Temperatur zu erwärmen, bei der hygienisch relevante Keime im Wasserreservoir, d.h., an den inneren Oberflächen des Reservoirs und im darin enthaltenen Wasser, weitgehend abgetötet werden. Die nachhaltige Bildung hygienisch relevanter Keimansiedlung (in einem Biofilm) an den inneren Oberflächen des Wasserreservoirs wird hierdurch unterdrückt bzw. verhindert. Diese Temperatur, die beispielsweise zwischen 60 °C und 90°C liegt, wird nachfolgend als Desinfektionstemperatur bezeichnet. Hierzu wird das Heizgerät von der Steuereinheit des Systems in regelmäßigen zeitlichen Abständen entsprechend angesteuert.

Bei der Steuereinheit kann es sich beispielsweise um eine dezentrale Steuereinheit handeln, die dezentral der Verbrauchereinheit zugeordnet ist. Die Funktion der Steuereinheit kann aber auch in einer zentralen Steuereinheit angesiedelt sein, die beispielsweise eine oder mehrere Verbrauchereinheiten oder sogar die gesamte Kabine des Flugzeugs steuert. In jedem Fall kann die Steuereinheit aus einem einzigen Modul bestehen oder auch auf mehrere Module aufgeteilt sein.

Das Wasser wird für einen Desinfektionszeitraum auf oder über der Desinfektionstemperatur gehalten, um sicherzustellen, dass hygienisch relevante Keimansiedlungen im Wasserreservoir abgetötet bzw. unterdrückt werden.

Um zu verhindern, dass das auf Desinfektionstemperatur erwärmte Wasser aus dem Wasserreservoir von einem Benutzer entnommen wird, erfolgt die Erwärmung auf Desinfektionstemperatur auf vorteilhafte Weise nur während Flugphasen oder Teilen von Flugphasen, in denen sichergestellt werden kann, dass niemand die Verbrauchereinheit benutzt. Hierzu greift die Steuereinheit auf vorteilhafte Weise auf Flugdaten des Flugzeugs zu, und zwar insbesondere direkt auf die Flugphasen, und steuert das Heizgerät so, das Wasser im Wasserreservoir nur dann auf die Desinfektionstemperatur erwärmt und auf bzw. über dieser gehalten wird, wenn aufgrund der aktuellen Flugphase davon ausgegangen werden kann, dass kein Benutzer die Verbrauchereinheit verwendet. Beispielsweise können der Landeanflug oder das anschließende Rollen auf der Landebahn bzw. dem Rollfeld zur Parkposition des Flugzeugs zum Desinfizieren des Wasserreservoirs durch Erwärmen des Wassers auf oder über die Desinfektionstemperatur verwendet werden. Es ist auch möglich, die Erwärmung über mehrere Flugphasen zu verteilen, also können beispielsweise der Landeanflug und das anschließende Rollen auf der Landebahn und dem Rollfeld zur Desinfektion verwendet werden. Es ist auch möglich, für nur ein Teil einer Flugphase, z.B. des Landeanflugs, zu verwenden,
In einer bevorzugten Ausführungsform ist die Steuereinheit dazu konfiguriert, mit einem Datenbus des Flugzeugs verbunden zu werden und von dem Datenbus die momentane Flugphase des Flugzeugs zu erhalten. Von dem Datenbus kann die Flugphase auf vorteilhafte Weise direkt von der Steuereinheit gelesen werden, ohne dass es einer manuellen Eingabe derselben an der Steuereinheit bedarf. So kann die Desinfektion des Wassers in dem Wasserreservoir vollautomatisch durchgeführt werden. Als Datenbus wird vorliegend jede Verbindung bezeichnet, über die Daten innerhalb des Flugzeugs übertragen werden. Der Datenbus kann kabelgebunden sein, bspw. in Form einer Ethernet-Verbindung, eines CAN-Bus oder ein Glasfaserleitung sein, aber auch drahtlos.

Es ist weiter bevorzugt, wenn das System eine Verbrauchereinheit mit einem Verbraucherventil umfasst. Indem das Verbraucherventil geöffnet wird, kann Wasser aus dem Wasserreservoir entnommen werden. Die Steuereinheit ist auf vorteilhafte Weise dazu konfiguriert, eine Öffnung des Verbraucherventils derart zu steuern, dass auf Desinfektionstemperatur erwärmtes Wasser aus dem Wasserreservoir durch das Verbraucherventil aus dem Wasserreservoir entnommen wird, so dass Wasser aus dem Wasserreservoir mit der Verbrauchertemperatur bereitgestellt werden kann, sobald eine Verwendung der Verbrauchereinheit durch einen Nutzer zu erwarten ist..

In anderen Worten umfasst das System in dieser bevorzugten Ausführungsform auch die Verbrauchereinheit und insbesondere ein Verbraucherventil, mit dem das Wasser aus dem Wasserreservoir entnommen wird. Beispielsweise kann es sich bei dem Verbraucherventil um das Ventil handeln, das geöffnet wird, um Wasser aus dem Wasserhahn eines Waschbeckens oder aus dem Dusche Kopf einer Dusche zu entnehmen. Solche Verbraucherventil können beispielsweise durch einen elektronischen Taster gesteuert werden, der das Ventil nach Betätigung durch einen Nutzer für einen vorbestimmten Zeitraum oder eine vorbestimmte Durchflussmenge öffnet.

In der bevorzugen Ausführungsform kann dieses Verbraucherventil von der Steuereinheit des Systems gesteuert werden. Insbesondere kann die Steuereinheit das Verbraucherventil öffnen und wieder schließen. Diese Möglichkeit wird vorliegend dazu verwendet, dass auf die Desinfektionstemperatur erwärmte Wasser aus dem Wasserreservoir vollständig oder teilweise abzulassen, sodass dieses wieder aus einem zentralen Wassertank mit kaltem Frischwasser aufgefüllt werden kann. Hierzu kann es gegebenenfalls notwendig sein, ein eventuell vorhandenes Einlassventil, über das der Zufluss von Wasser in das Wasserreservoir kontrolliert wird, ebenfalls zu öffnen. Durch das Ablassen des auf die Desinfektionstemperatur erwärmten Wassers über das Verbraucherventil werden auf vorteilhafte Weise die inneren Oberflächen der Leitungen zwischen dem Wasserreservoir und dem eigentlichen Auslass auch zumindest teilweise desinfiziert. Das Ablassen des Wassers soll in der vorliegenden Ausführungsform beendet sein, sobald wieder mit einer Benutzung der Verbrauchereinheit gerechnet werden kann, um Verletzungen durch das aus die Desinfektionstemperatur erwärmte Wasser zu verhindern. Beispielsweise kann das Ablassen so gesteuert werden, dass mit Abschluss der Rollphase auf dem Vorfeld, also der zur Desinfektion vorgesehenen Flugphase, und Erreichen der Parkposition die Temperatur des Wassers in dem Wasserreservoir wieder die Verbrauchertemperatur angenommen hat.

Alternativ oder ergänzend ist in einer bevorzugten Ausführungsform vorgesehen, dass das Wasserreservoir über ein Zulaufventil und ein Überlauf verfügt, wobei durch Öffnen des Zulaufventils Wasser aus einem zentralen Wassertank in das Wasserreservoir nachgefüllt werden kann und über den Überlauf Wasser aus dem Wasserreservoir abfließen kann. Die Steuereinheit ist dazu konfiguriert, das Öffnen des Zulaufventils derart zu steuern, dass auf Desinfektionstemperatur erwärmtes Wasser aus dem Wasserreservoir durch den Überlauf aus dem Wasserreservoir abfließt, so dass Wasser aus dem Wasserreservoir mit der Verbrauchertemperatur bereitgestellt werden kann, sobald eine Verwendung der Verbrauchereinheit durch einen Nutzer zu erwarten ist.

In der bevorzugen Ausführungsform ist das Wasserreservoir mit einen Zulaufventil versehen, das geöffnet werden muss, um das Wasserreservoir mit Wasser aus einem zentralen Wassertank zu befüllen. Eine derartige Anordnung bietet sich insbesondere an, wenn zur Versorgung des Wasserreservoirs ein Hochdrucksystem verwendet wird und das Wasser bei einem niedrigeren Druck in dem Wasserreservoir gespeichert wird.

Weiterhin verfügt das Wasserreservoir über einen Überlauf, durch den Wasser aus dem Wasserreservoir ablaufen kann, um Schäden an dem Wasserreservoir zu vermeiden, wenn dieses überfüllt wird, bzw. zur Be- und Entlüftung des Wasserreservoirs. Dieser Überlauf wird auf vorteilhafte Weise verwendet, um das auf Desinfektionstemperatur erwärmte Wasser aus dem Wasserreservoir ablaufen zu lassen, indem kaltes Wasser aus dem Wassertank in das mit heißem Wasser gefüllte Wasserreservoir eingefüllt wird. Konkret wird das Zulaufventil so lange geöffnet, bis sich durch Mischung des kalten, zulaufenden Wassers und des in dem Wasserreservoir befindlichen heißen Wassers wieder die Verbrauchertemperatur eingestellt hat. Dieses Vorgehen hat den Vorteil, dass kein auf Desinfektionstemperatur erwärmtes Wasser durch die Verbrauchereinheit fließt und somit die Verletzungsgefahr durch das heiße Wasser minimiert wird.

Vorzugsweise ist die Steuereinheit weiterhin dazu konfiguriert, Wasser in dem Wasserreservoir nur dann auf Desinfektionstemperatur zu erwärmen, wenn ein oder mehrere Kabinendaten vorbestimmte Werte annehmen. Die Kabinendaten können auf vorteilhafte Weise ebenfalls von einem Bus abgegriffen werden und Hinweise darauf geben, ob die Gefahr besteht, dass eine Person die Verbrauchereinheit betätigen könnte.

Vorzugsweise ist die Verbrauchereinheit ein Waschbecken oder eine Dusche in einem Waschraum und die einen oder mehreren Kabinendaten sind ein Benutzungsstatus des Waschraums und/oder einen Zustand eines Anwesenheitssensor, der eine Anwesenheit von einer Person in dem Waschraum erfasst. So kann beispielsweise die Erwärmung des Wassers in dem Wasserreservoir, dass der Verbrauchereinheit zugeordnet ist, nur dann erlaubt werden, wenn der Benutzungsstatus des Waschraums anzeigt, dass dieser unbenutzt ist, also sich keine Person in dem Waschraum aufhält. Zum gleichen Zweck können alternativ oder zusätzlich Anwesenheitssensoren verwendet werden, die ansonsten beispielsweise bei Annäherung Wasser aus einem Wasserhahn ausgeben, d. h., das entsprechende Verbraucherventil öffnen, oder die Anwesenheit von Personen in einem Waschraum überwachen.

In einer weiteren bevorzugten Ausführungsform umfasst das System zusätzlich eine Durchflussdesinfektionseinheit, die aus dem Wasserreservoir ausströmendes Wasser desinfiziert. Dabei ist die Steuereinheit dazu konfiguriert, die Durchflussdesinfektionseinheit zu deaktivieren, wenn in dem Wasserreservoir vorgehaltenes Wasser auf die Desinfektionstemperatur erwärmt wird. Die Durchflussdesinfektionseinheit desinfiziert auf vorteilhafte Weise durchströmendes Wasser beispielsweise unter Verwendung von UV-Licht. Damit diese nicht beschädigt wird, wird sie abgeschaltet, wenn das heiße, auf Desinfektionsoperator erwärmte Wasser, aus dem Wasserreservoir abgelassen wird. Die Steuereinheit kann beispielsweise auch dazu konfiguriert sein, die Durchflussdesinfektionseinheit immer dann zu aktivieren, wenn das Verbraucherventil geöffnet wird und das Wasser in dem Wasserreservoir bei der Verbrauchertemperatur gehalten wird, um in diesem Fall das ausströmende Wasser gezielt zu desinfizieren.

In einem zweiten Aspekt wird die der Erfindung zugrunde liegende Aufgabe durch ein Verfahren zum Aufwärmen von Wasser für eine Verbrauchereinheit in einem Flugzeug mit einem Wasserreservoir gelöst, wobei das Wasserreservoir ein Heizgerät umfasst, mit dem in dem Wasserreservoir vorgehaltenes Wasser auf eine Verbrauchertemperatur erwärmt wird, so dass aus dem Wasserreservoir für die Verbrauchereinheit Wasser bei der Verbrauchertemperatur zur unmittelbaren Verwendung bereitgestellt wird. In dem Wasserreservoir vorgehaltenes Wasser wird automatisch auf eine Desinfektionstemperatur erwärmt, und eine Temperatur des Wassers wird in dem Wasserreservoir für einen Desinfektionszeitraum auf oder über der Desinfektionstemperatur gehalten, bei der eine Keimbildung und -ansiedlung im Wasserreservoir und an dessen inneren Oberflächen durch thermische Behandlung beseitigt oder unterdrückt wird. Das in dem Wasserreservoir enthaltene Wasser nur während Flugphasen oder Teilen von Flugphasen des Flugzeugs auf die Desinfektionstemperatur erwärmt wird, in denen die Verwendung der Verbrauchereinheit durch einen Nutzer nicht zu erwarten ist.

Dabei ist es bevorzugt, wenn eine aktuelle Flugphase des Flugzeugzeug von einem Datenbus des Flugzeugs erhalten wird.

In einer bevorzugten Ausgestaltung des Verfahrens kann durch ein Öffnen eines Verbraucherventils Wasser aus dem Wasserreservoir entnommen werden. Das Verbraucherventil wird derart geöffnet, dass auf Desinfektionstemperatur erwärmtes Wasser aus dem Wasserreservoir durch das Verbraucherventil aus dem Wasserreservoir entnommen wird, so dass Wasser aus dem Wasserreservoir mit der Verbrauchertemperatur bereitgestellt werden kann, sobald eine Verwendung der Verbrauchereinheit durch einen Nutzer zu erwarten ist.

Alternativ oder ergänzend ist es bevorzugt, wenn durch ein Öffnen eines Zulaufventils Wasser aus einem zentralen Wassertank in das Wasserreservoir nachgefüllt werden kann und über einen Überlauf Wasser aus dem Wasserreservoir abfließen kann, wobei das Zulaufventil derart geöffnet wird, dass auf Desinfektionstemperatur erwärmtes Wasser aus dem Wasserreservoir durch den Überlauf aus dem Wasserreservoir abfließt, so dass Wasser aus dem Wasserreservoir mit der Verbrauchertemperatur bereitgestellt werden kann, sobald eine Verwendung der Verbrauchereinheit durch einen Nutzer zu erwarten ist.

In einer bevorzugten Ausführungsform wird Wasser in dem Wasserreservoir nur dann auf Desinfektionstemperatur erwärmt, wenn ein oder mehrere Kabinendaten vorbestimmte Werte annehmen.

Die Verbrauchereinheit ist vorzugsweise ein Waschbecken oder eine Dusche in einem Waschraum, und die einen oder mehreren Kabinendaten einen Benutzungsstatus des Waschraums und/oder einen Zustand eines Anwesenheitssensor, der eine Anwesenheit von einer Person in dem Waschraum erfasst.

Das System umfasst vorzugsweise weiterhin eine Durchflussdesinfektionseinheit, die aus dem Wasserreservoir ausströmendes Wasser desinfiziert, wobei die Durchflussdesinfektionseinheit deaktiviert wird, wenn in dem Wasserreservoir vorgehaltenes Wasser auf die Desinfektionstemperatur erwärmt wird. Die Durchflussdesinfektionseinheit wird in einer beispielhaften bevorzugten Ausführungsform immer dann aktiviert, wenn bei der Verbrauchertemperatur gehaltenes Wasser aus dem Wasserreservoir entnommen wird, um das ausströmende Wasser zu desinfizieren.

Die Vorteile der unterschiedlichen Ausführungsformen des vorstehend beschriebenen Verfahrens entsprechen den Vorteilen der jeweiligen Ausführungsformen des ebenfalls vorstehend beschriebenen Systems, die übereinander entsprechende Merkmale verfügen.

In einem weiteren Aspekt wird die Aufgabe durch ein Flugzeug mit einem der vorstehend beschriebenen System gelöst. Die Vorteile des Flugzeugs entsprechend den Vorteilen des darin verwendeten Systems.

Nachfolgend wird die Erfindung bezugnehmend auf die Zeichnungen näher beschrieben, dabei zeigt
- Figur 1: ein erstes Ausführungsbeispiel eines Systems zum Aufwärmen von Wasser für eine Verbrauchereinheit in einem Flugzeug,
- Figur 2: ein zweites Ausführungsbeispiel eines Systems zum Aufwärmen von Wasser für eine Verbrauchereinheit in einem Flugzeug und
- Figur 3: ein Ausführungsbeispiel eines Flugzeugs mit einem System zum Aufwärmen von Wasser für eine Verbrauchereinheit.

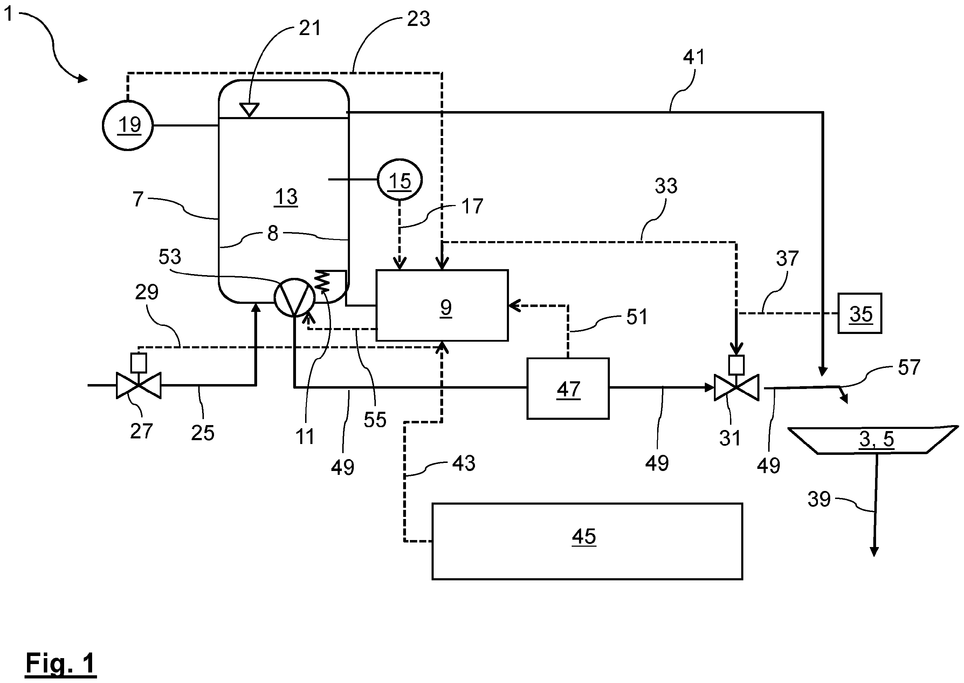

Figur 1 zeigt ein erstes Ausführungsbeispiel eines Systems 1 zum Aufwärmen von Wasser für eine Verbrauchereinheit 3 in Form eines Waschbeckens 5. Das System 1 umfasst ein Wasserreservoir 7 mit inneren Oberflächen 8 sowie eine Steuereinheit 9. Im Wasserreservoir 7 ist ein Heizgerät 11 angeordnet, mit dem in dem Wasserreservoir 7 enthaltenes Wasser 13 erwärmt werden kann. Die Heizleistung des Heizgeräts 11 wird von der Steuereinheit 9 gesteuert. Des Weiteren ist ein Temperatursensor 15 vorgesehen, der über eine Verbindung 17, die beispielsweise als digitale Datenleitung ausgebildet sein kann oder unmittelbar ein analoges oder diskretes Signal übertragt, mit der Steuereinheit verbunden ist und die Temperatur des Wassers 13 im Wasserreservoir 7 misst. Zudem umfasst das System 1 einen Füllstandsensor 19 mit dem der Füllstand 21 des Wasserreservoirs 7 ermittelt und über eine Verbindung 23 an die Steuereinheit 9 übertragen wird, wobei auch die Verbindung 23 als digitale Datenleitung ausgebildet sein kann oder aber auch unmittelbar ein analoges oder diskretes Messsignal an die Steuereinheit 9 übertragen kann.

Das Wasserreservoir 7 kann über einen Zulauf 25 aus einem nicht dargestellten zentralen Wassertank gefüllt werden. In dem Ausführungsbeispiel in Figur 1 stehen die Leitungen zwischen dem Zulauf 25 und dem zentralen Wassertank unter hohem Druck. Daher ist ein Füllventil 27 vorgesehen, dass zum Befüllen des Wasserreservoirs 7 geöffnet werden muss. Das Öffnen und Schließen des Füllventils 27 steuert ebenfalls die Steuereinheit 9, wobei die Steuerbefehle über eine Verbindung 29 übertragen werden. Die Verbindung 29 ist vorzugsweise als digitale Datenleitung ausgebildet. Es ist aber auch denkbar, statt einer digitalen Datenleitung ein analoges oder diskretes Signal direkt zu übertragen.

Um an dem Waschbecken 5 Wasser aus dem Wasserreservoir 7 zu entnehmen, ist ein Verbraucherventil 31 vorgesehen. Das Öffnen und Schließen des Verbraucherventil 31 kann sowohl von der Steuereinheit 9 über eine Verbindung 33, die beispielsweise als digitale Datenleitung ausgebildet oder auch zur Übertragung von analogen Signalen ausgebildet sein kann, als auch von einem Verbraucher mittels eines Tasters 35 gesteuert werden, der in der vorliegenden beispielhaften Ausführungsform ebenfalls über eine Verbindung 37 mit dem Verbraucherventil 31 verbunden ist. Betätigt der Nutzer den Taster 35 wird ein Signal über die Datenleitung 37 an das Verbraucherventil 31 gesendet, dass daraufhin für einen vorbestimmten Zeitraum oder eine vorbestimmte Wassermenge öffnet. Aus dem Waschbecken 5 kann Wasser durch einen Abfluss 39 in einen Schmutzwassertank oder nach außenbords abfließen. Der Schmutzwassertank bzw. der Abfluss nach Außenbord sind vorliegend nicht dargestellt.

Das Wasserreservoir 7 verfügt weiterhin über einen Überlauf 41, durch den Wasser aus dem Wasserreservoir 7 ablaufen kann, wenn dieses über einen vorgesehenen Füllstand 21 befüllt wird. Hierdurch wird eine Beschädigung des Wasserreservoirs 7 vermieden und dessen Be- und Entlüftung sichergestellt. In dem in Figur 1 gezeigten Ausführungsbeispiel mündet der Überlauf 41 in das Waschbecken 5. Es ist aber ebenso gut möglich, den Überlauf direkt nach außenbords zu leiten oder beispielsweise direkt in den Abfluss 39 des Waschbeckens 5.

Schließlich ist die Steuereinheit 9 über eine Datenleitung 43 mit einem Datennetzwerk 45 des Flugzeugs verbunden, über das es Flugdaten, wie beispielsweise eine aktuelle Flugphase, und auch Kabinendaten, wie beispielsweise einen Benutzungsstatus eines Waschraums, erhalten kann. Das Datennetzwerk 45 kann beispielsweise ein Datenbus sein, von dem die Steuereinheit 9 die benötigten Daten selbstständig liest. Es ist aber auch möglich, dass eine zentrale Recheneinheit in dem Flugzeug die benötigten Daten selbsttätig an die Steuereinheit 9 sendet oder dass die Steuereinheit 9 diese von einer zentralen Recheneinheit abfragt. Auch andere Ausgestaltungen sind denkbar.

Weiterhin verfügt das System 1 über eine Durchflussdesinfektionseinheit 47, die mittels UV-Lichts durch eine Versorgungsleitung 49 strömendes Wasser aus dem Wasserreservoir 7 desinfizieren kann. Die Versorgungsleitung 49 verbindet das Wasserreservoir 7 mit dem Verbraucherventil 31. Über eine Datenleitung 51 ist auch die Durchflussdesinfektionseinheit 47 mit der Steuereinheit 9 verbunden, sodass die Durchflussdesinfektionseinheit 47 nach Bedarf von der Steuereinheit 9 ein- und ausgeschaltet werden kann.

Im vorliegenden Ausführungsbeispiel ist ein Wasserreservoir 7 vorgesehen, in dem das Wasser 13 bei Umgebungsdruck vorgehalten wird. Daher ist in dem Wasserreservoir 7 eine Mikropumpe 53 angeordnet, mit der Wasser aus dem Wasserreservoir 7 durch die Versorgungsleitung 49 und das Verbraucherventil 31 zu einem Wasserhahn 57 gefördert werden kann, aus dem das Wasser in das Waschbecken 5 strömt. Die Mikropumpe kann in einer alternativen Ausführungsform auch außerhalb des Wasserreservoirs 7 direkt and die Versorgungsleitung 49 angeschlossen sein. Die Mikropumpe 53 ist über eine Datenleitung 55 mit der Steuereinheit 9 verbunden und kann von dieser aktiviert oder deaktiviert bzw. an- und ausgeschaltet werden. Die Mikropumpe 53 wird auch dann aktiviert, wenn der Taster 35 von einem Benutzer betätigt wird, um Wasser aus dem Wasserreservoir 7 in das Waschbecken 5 zu fördern.

Im Flugbetrieb, wenn das Waschbecken 5 bzw. die Verbrauchereinheit 3 von Benutzern wie beispielsweise Passagieren oder Kabinenpersonal benutzt werden soll, steuert die Steuereinheit 9 das Heizgerät 11 so, dass das in dem Wasserreservoir 7 vorgehaltene oder enthaltene Wasser 13 bei einer Verbrauchertemperatur gehalten wird. Die Verbrauchtemperatur wird so gewählt, dass das Wasser beispielsweise zum Händewaschen eine angenehme Temperatur hat. Beispiel Fall kann die Verbrauchertemperatur 37°C betragen. Vorzugsweise beträgt die Verbrauchertemperatur mehr als 20°C und weniger als 40°C. Dabei greift die Steuereinheit 9 auf die von dem Temperatursensor 15 bereitgestellten Messwerte zurück, um die Wassertemperatur wie gewünscht einzustellen.

Indem in dem Wasserreservoir 7 vorgehaltenes Wasser 13 bereits auf eine geeignete Verbrauchertemperatur erwärmt wird, kann dieses auf vorteilhafte Weise unmittelbar aus dem Wasserhahn 57 ins Waschbecken 5 ausgegeben werden, ohne dass die Gefahr des Verbrühens besteht. Damit kann insbesondere auf eine Mischbatterie verzichtet werden, in der auf herkömmliche Weise auf höhere Temperaturen, wie beispielsweise 60 °C, erwärmtes Wasser wieder mit kaltem Wasser vermischt wird, um die Temperatur des Wassers in einen Temperaturbereich abzusenken, in dem keine Verbrühungsgefahr besteht. Dies erlaubt es, das Gewicht der Mischbatterie einzusparen und spart zudem Energie, da das Wasser nicht zunächst auf eine höhere Temperatur erwärmt werden muss, bei der höhere Wärmeverluste auftreten bzw. eine dickere Isolation notwendig ist, um es im Nachgang wieder durch Vermischung mit kaltem Wasser aus einem Wassertank auf eine zur Ausgabe geeignete Temperatur abzukühlen. Das vorliegende Wasserreservoir 7 kann daher kompakter und leichter ausgestaltet sein, da weniger Isolationsmaterial benötigt wird.

Um die Bildung und Ansiedlung von Keimen in dem Wasserreservoir 7 zu verhindern, wird dieses regelmäßig, beispielsweise einmal am Tag, während einer Flugphase, in der nicht mit einer Benutzung der Verbrauchereinheit 3 gerechnet werden muss, auf eine Desinfektionstemperatur oder darüber erwärmt und für einen Desinfektionszeitraum bei dieser Temperatur bzw. darüber gehalten. Desinfektionstemperatur beträgt beispielsweise 60 °C, mehr als 60 °C, mehr als 70°C oder mehr als 80 °C. Durch die Erwärmung des Wassers im Wasserreservoir 7 werden Keimansiedlung im Wasser und auf inneren Oberflächen 8 des Wasserreservoirs 7 unterbunden bzw. abgetötet. Der Desinfektionszeitraum kann beispielsweise mehr als 1 Minute, mehr als 5 Minuten oder mehr als 10 Minuten betragen. Nach Ablauf des Desinfektionszeitraums wird die Temperatur des Wassers 13 in dem Wasserreservoir 7 wieder auf die Verbrauchertemperatur abgesenkt.

Hierzu kann beispielsweise das Verbraucherventil 31 von der Steuereinheit 9 geöffnet und die Mikropumpe 53 aktiviert werden, sodass das auf die Desinfektionstemperatur erwärmte Wasser durch die Versorgungsleitung 49, das Verbraucherventil 31 und den Wasserhahn 57 in das Waschbecken 5 abfließt. Dies hat den Vorteil, dass beim Abfließen des Wassers auch die zwischen dem Wasserreservoir 7 und dem Waschbecken 5 liegenden Komponenten thermisch behandelt werden. Im Anschluss oder parallel öffnet die Steuereinheit 9 das Zulaufventil 27, sodass Wasser aus dem zentralen Wassertank (nicht dargestellt) durch die Zulaufleitung bzw. den Zulauf 25 in das Wasserreservoir 7 kann.

Alternativ kann die Steuereinheit 9 zum Absenken der Temperatur des Wassers 13 im Wasserreservoir 7 auf die Verbrauchertemperatur auch lediglich das Zulaufventil 27 öffnen, sodass kaltes Wasser aus dem zentralen Wassertank (nicht dargestellt) durch den Zulauf 25 in das Wasserreservoir 7 einströmt und sich mit dem auf Desinfektionstemperatur erwärmten Wasser 13 vermischt. Überschüssiges Wasser kann dann durch den Überlauf 41 abfließen. Ist die Temperatur des Wassers 13 im Wasserreservoir 7, die von dem Temperatursensor 15 gemessen wird, wieder auf die Verbrauchertemperatur abgesunken, schließt die Steuereinheit 9 das Zulaufventil 27. Dieses Vorgehen ist insbesondere dann vorteilhaft, wenn der Überlauf 41 direkt nach außenbords geleitet wird oder direkt in den Ablauf 39 des Waschbeckens mündet, da auf diese Weise die Gefahr eines Verbrühens eines Benutzers der Verbrauchereinheit 3 verringert wird. Auch wird das Risiko verringert, dass möglicherweise temperaturempfindliche Komponenten zwischen dem Wasserreservoir 7 und dem Wasserhahn 57, wie eine Durchflussdesinfektionseinheit 47, durch das heiße Wasser beschädigt werden.

Um grundsätzlich zu verhindern, dass sich ein Benutzer der Verbrauchereinheit 3 verbrüht, erfolgt die Erwärmung des Wassers 13 in dem Wasserreservoir 7 ausschließlich während Flugphasen oder Teilen von Flugphasen, in denen davon ausgegangen werden kann, dass die Verbrauchereinheit nicht verwendet wird. Ein Beispiel für eine solche Flugphase sind der Landeanflug, die eigentliche Landung und das nachfolgende Rollen auf der Landebahn und dem Vorfeld bis zum Erreichen der eigentlichen Parkposition. In diesen Flugphasen bzw. Teilen von Flugphasen ist die Verwendung von Verbrauchereinheiten untersagt, und es kann daher davon ausgegangen werden, dass die Verbrauchereinheit nicht von einem Benutzer verwendet wird. In welcher Flugphase sich das Flugzeug aktuell befindet, kann die Steuereinheit 9 über die Datenleitung 43 von dem Flugzeugnetzwerk 45 abfragen. Die Steuerung der Desinfektion des Wasserreservoirs 7 erfolgt so, dass bei Abschluss der Desinfektionsflugphase, Beispiel sollte beim Erreichen der Parkposition, die Wassertemperatur im Wasserreservoir 7 wieder auf die Verbrauchertemperatur abgesunken ist.

Zusätzlich ist in dem Ausführungsbeispiel in Figur 1 vorgesehen, dass die Steuereinheit 9 zudem Kabinendaten von dem Flugzeugnetzwerk 45 abfragt und bei der thermischen Behandlung des Wasserreservoirs 7 berücksichtigt. Beispielsweise kann die Steuereinheit 9 so ausgestaltet sein, dass das Wasser 13 im Wasserreservoir 7 nur dann auf die Desinfektionstemperatur erwärmt wird, wenn ein Waschraum, in dem das Waschbecken 5 angeordnet ist, nicht in Benutzung ist. Auch können Anwesenheitssensoren verwendet werden, die überprüfen, ob sich eine Person in dem Waschraum aufhält. Weiterhin kann die Steuereinheit 9 den Taster 35, mit dem Wasser aus dem Wasserreservoir 7 zur Ausgabe aus dem Wasserhahn 57 angefordert werden kann, während der Desinfektionsflugphase deaktivieren, um zu verhindern, dass auf Desinfektionstemperatur erwärmtes Wasser in das Waschbecken 5 ausgegeben wird.

In dem Ausführungsbeispiel in Figur 1 schaltet die Steuereinheit 9 zudem die Durchflussdesinfektionseinheit 47 während des Ablassens des auf die Desinfektionstemperatur erwärmten Wassers ab, um zu verhindern, dass diese durch die Versorgungsleitung 49 ausfließendes Wasser beschädigt wird. Grundsätzlich ist die Steuereinheit 9 so konfiguriert, dass die Durchflussdesinfektionseinheit immer dann aktiv ist, wenn das Verbraucherventil 31 geöffnet ist, so dass aus dem Wasserhahn 57 ausströmendes Wasser zusätzlich desinfiziert wird.

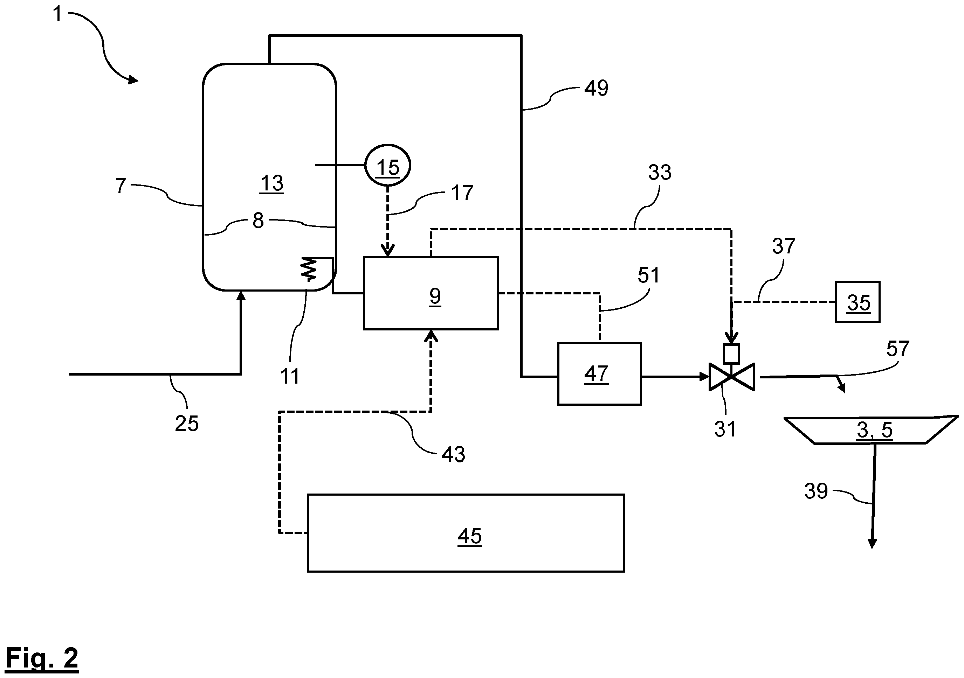

In Figur 2 ist ein zweites Ausführungsbeispiel eines Systems 1 zum Aufwärmen von Wasser für eine Verbrauchereinheit 3 in Form eines Waschbeckens 5 in einem Flugzeug dargestellt. Das Ausführungsbeispiel in Figur 2 wird nur insoweit näher beschrieben, als es von dem Ausführungsbeispiel in Figur 1 abweicht. In beiden Figuren wurden gleich bezeichnete Elemente mit dem gleichen Bezugszeichen versehen.

Das System 1 aus Figur 2 unterscheidet sich von dem System in Figur 1 insbesondere dadurch, dass das Wasser 13 in dem Wasserreservoir 7 unter Druck steht und zwischen dem zentralen Wassertank (nicht dargestellt), aus dem das Wasserreservoir 7 über den Zulauf 25 mit frischem Wasser versorgt wird, und dem Wasserreservoir 7 selbst kein Zulaufventil angeordnet ist. Wird in dieser Ausführungsform das Verbraucherventil 31 geöffnet, sodass Wasser 13 aus dem Wasserreservoir sieben durch die Versorgungsleitung 49 und den Wasserhahn 57 in das Waschbecken 5 abfließt, strömt unmittelbar frisches Wasser aus dem Wassertank durch den Zulauf 25 in das Wasserreservoir 7 nach.

Abweichend von dem Vorgehen in dem in Bezug auf Figur 1 beschriebenen Ausführungsbeispiel wird in dem in Figur 2 gezeigten Ausführungsbeispiel zum Absenken der Wassertemperatur von der Desinfektionstemperatur auf die Verbrauchertemperatur lediglich das Verbraucherventil 31 durch die Steuereinheit 9 geöffnet. Beim Abfließen des heißen Wassers aus dem Wasserreservoir 7 durch die Versorgungsleitung 49 und den Wasserhahn 57 in das Waschbecken 5 strömt unmittelbar kaltes Wasser aus dem zentralen Wassertank (nicht dargestellt) durch den Zulauf 25 nach. Durch Vermischung des heißen Wassers 13 im Wasserreservoir 7 mit dem kalt nachströmenden Wasser aus dem Zulauf 25 sinkt die Temperatur des Wassers 13 im Wasserreservoir 7 wieder auf die Verbrauchertemperatur. Gegebenenfalls kann die Steuereinheit 9 so konfiguriert sein, dass sie das Verbraucherventil 31 nicht bereits dann schließt, wenn der Temperatursensor 15 wieder die Verbrauchertemperatur misst, sondern das Wasser noch weiter durch die Versorgungshaltung 49 strömen lässt, bis sichergestellt ist, dass auch in der Versorgungsleitung 49 kein heißes Wasser mehr zurück bleibt.

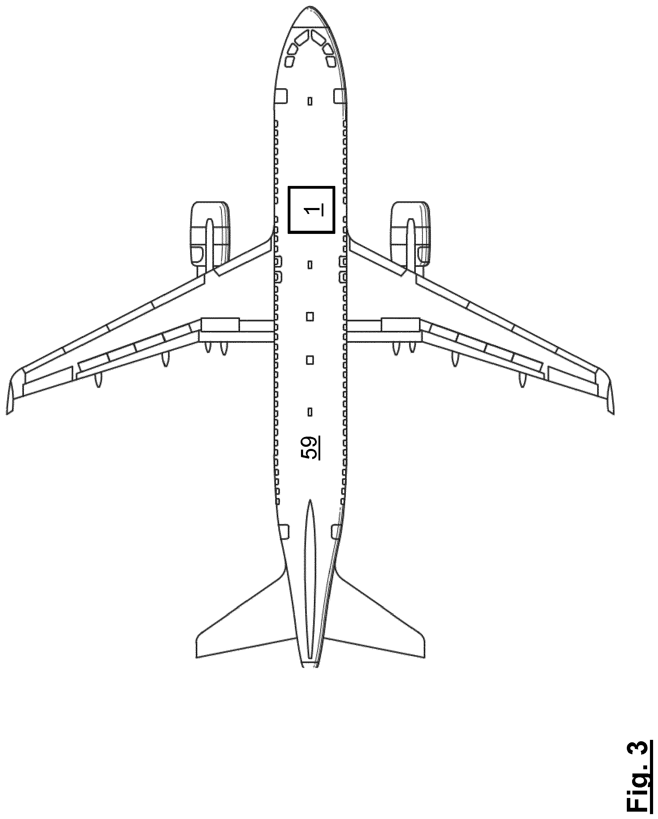

Schließlich zeigt Figur 3 ein Ausführungsbeispiel eines Flugzeugs 59, in dem ein System 1 gemäß Figur 1 oder Figur 2 verwendet werden kann.

## Patentansprüche

1. System (1) zum Aufwärmen von Wasser für eine Verbrauchereinheit (3, 5) in einem Flugzeug (59), wobei das System ein Wasserreservoir (7) und eine Steuereinheit (9) umfasst,
wobei das Wasserreservoir (7) ein Heizgerät (11) umfasst, dass dazu konfiguriert ist, in dem Wasserreservoir (7) vorgehaltenes Wasser (13) auf eine Verbrauchertemperatur zu erwärmen, so dass aus dem Wasserreservoir (7) für die Verbrauchereinheit (3, 5) Wasser bei der Verbrauchertemperatur zur unmittelbaren Verwendung bereitgestellt werden kann, und
wobei die Steuereinheit (9) dazu konfiguriert ist, das Heizgerät (11) so zu steuern, dass in dem Wasserreservoir (7) vorgehaltenes Wasser automatisch auf oder über eine Desinfektionstemperatur erwärmt wird, bei der eine Keimbildung im Wasserreservoir (7) und an dessen inneren Oberflächen (8) durch thermische Behandlung unterdrückt oder beseitigt wird, und eine Temperatur des Wassers in dem Wasserreservoir (7) für einen Desinfektionszeitraum auf oder über der Desinfektionstemperatur gehalten wird, wobei die Erwärmung auf die Desinfektionstemperatur nur während Flugphasen oder Teilen von Flugphasen des Flugzeugs (59) erfolgt, in denen die Verwendung der Verbrauchereinheit (3, 5) durch einen Nutzer nicht zu erwarten ist.

2. System (1) nach Anspruch 1, wobei die Steuereinheit (9) dazu konfiguriert ist, mit einem Datenbus (45) des Flugzeugs (59) verbunden zu werden und von dem Datenbus (45) die momentane Flugphase des Flugzeugs (59) zu erhalten.

3. System (1) nach Anspruch 1 oder 2 umfassend eine Verbrauchereinheit (3, 5) mit einem Verbraucherventil (31), wobei durch Öffnen des Verbraucherventils (31) Wasser aus dem Wasserreservoir (7) entnommen werden kann,
wobei die Steuereinheit (9) dazu konfiguriert ist, eine Öffnung des Verbraucherventils (31) derart zu steuern, dass auf Desinfektionstemperatur erwärmtes Wasser (13) aus dem Wasserreservoir (7) durch das Verbraucherventil (31) aus dem Wasserreservoir (7) entnommen wird, so dass Wasser aus dem Wasserreservoir (7) mit der Verbrauchertemperatur bereitgestellt werden kann, sobald eine Verwendung der Verbrauchereinheit (3, 5) durch einen Nutzer zu erwarten ist.

4. System (1) nach Anspruch 1 oder 2 umfassend eine Zulaufventil (27) und einen Überlauf (41), wobei durch Öffnen des Zulaufventils (27) Wasser aus einem zentralen Wassertank in das Wasserreservoir (7) nachgefüllt werden kann und wobei über den Überlauf Wasser (13) aus dem Wasserreservoir (7) abfließen kann,
wobei die Steuereinheit (9) dazu konfiguriert ist, das Öffnen des Zulaufventils (27) derart zu steuern, dass auf Desinfektionstemperatur erwärmtes Wasser aus dem Wasserreservoir (7) durch den Überlauf (41) aus dem Wasserreservoir (7) abfließt, so dass Wasser aus dem Wasserreservoir (7) mit der Verbrauchertemperatur bereitgestellt werden kann, sobald eine Verwendung der Verbrauchereinheit (7) durch einen Nutzer zu erwarten ist..

5. System (1) nach einem der Ansprüche 1 bis 4, wobei die Steuereinheit (9) weiterhin dazu konfiguriert ist, Wasser (13) in dem Wasserreservoir (7) nur dann auf Desinfektionstemperatur zu erwärmen, wenn ein oder mehrere Kabinendaten vorbestimmte Werte annehmen.

6. System (1) nach Anspruch 5, wobei die Verbrauchereinheit (3) ein Waschbecken (5) oder eine Dusche in einem Waschraum ist und wobei die einen oder mehreren Kabinendaten einen Benutzungsstatus des Waschraums und/oder einen Zustand eines Anwesenheitssensor, der eine Anwesenheit von einer Person in dem Waschraum erfasst.

7. System (1) nach einem der Ansprüche 1 bis 6, wobei das System (1) weiterhin eine Durchflussdesinfektionseinheit (47) umfasst, die dazu konfiguriert ist, aus dem Wasserreservoir ausströmendes Wasser zu desinfizieren,
wobei die Steuereinheit (9) dazu konfiguriert ist, die Durchflussdesinfektionseinheit (47) zu deaktivieren, wenn in dem Wasserreservoir (7) vorgehaltenes Wasser (13) auf die Desinfektionstemperatur erwärmt wird.

8. Verfahren zum Aufwärmen von Wasser für eine Verbrauchereinheit (3, 5) in einem Flugzeug (59) mit einem Wasserreservoir (7),
wobei das Wasserreservoir (7) ein Heizgerät (1) umfasst, mit dem in dem Wasserreservoir (7) vorgehaltenes Wasser (13) auf eine Verbrauchertemperatur erwärmt wird, so dass aus dem Wasserreservoir (7) für die Verbrauchereinheit (3, 5) Wasser bei der Verbrauchertemperatur zur unmittelbaren Verwendung bereitgestellt wird, und
in dem Wasserreservoir (7) vorgehaltenes Wasser (13) automatisch auf eine Desinfektionstemperatur erwärmt und eine Temperatur des Wassers in dem Wasserreservoir (7) für einen Desinfektionszeitraum auf oder über der Desinfektionstemperatur gehalten wird, bei der eine Keimbildung im Wasserreservoir (7) und an dessen inneren Oberflächen (8) durch thermische Behandlung unterdrückt oder beseitigt wird, wobei das in dem Wasserreservoir (7) enthaltene Wasser nur während Flugphasen oder Teilen von Flugphasen des Flugzeugs (59) auf die Desinfektionstemperatur erwärmt wird, in denen die Verwendung der Verbrauchereinheit (3, 5) durch einen Nutzer nicht zu erwarten ist.

9. Verfahren nach Anspruch 8, wobei eine aktuelle Flugphase des Flugzeugzeug (59) von einem Datenbus (45) des Flugzeugs (59) erhalten wird.

10. Verfahren nach Anspruch 8 oder 9, wobei durch ein Öffnen eines Verbraucherventils (31) Wasser aus dem Wasserreservoir (7) entnommen werden kann und das Verbraucherventil (31) derart geöffnet wird, dass auf Desinfektionstemperatur erwärmtes Wasser (13) aus dem Wasserreservoir (7) durch das Verbraucherventil (31) aus dem Wasserreservoir (7) entnommen wird, so dass Wasser aus dem Wasserreservoir (7) mit der Verbrauchertemperatur bereitgestellt werden kann, sobald eine Verwendung der Verbrauchereinheit (3, 5) durch einen Nutzer zu erwarten ist.

11. Verfahren nach Anspruch 8 oder 9, wobei durch ein Öffnen eines Zulaufventils (27) Wasser aus einem zentralen Wassertank in das Wasserreservoir (7) nachgefüllt werden kann und über einen Überlauf (41) Wasser aus dem Wasserreservoir abfließen kann,
wobei das Zulaufventil (27) derart geöffnet wird, dass auf Desinfektionstemperatur erwärmtes Wasser (13) aus dem Wasserreservoir (7) durch den Überlauf (41) aus dem Wasserreservoir (7) abfließt, so dass Wasser aus dem Wasserreservoir (7) mit der Verbrauchertemperatur bereitgestellt werden kann, sobald eine Verwendung der Verbrauchereinheit (3, 5 ) durch einen Nutzer zu erwarten ist.

12. Verfahren nach einem der Ansprüche 8 bis 11, wobei Wasser in dem Wasserreservoir (7) nur dann auf Desinfektionstemperatur erwärmt wird, wenn ein oder mehrere Kabinendaten vorbestimmte Werte annehmen.

13. Verfahren nach Anspruch 12, wobei die Verbrauchereinheit (3) ein Waschbecken (5) oder eine Dusche in einem Waschraum ist und wobei die einen oder mehreren Kabinendaten einen Benutzungsstatus des Waschraums und/oder einen Zustand eines Anwesenheitssensor, der eine Anwesenheit von einer Person in dem Waschraum erfasst.

14. Verfahren nach einem der Ansprüche 8 bis 13, wobei aus dem Wasserreservoir (7) ausströmendes Wasser mittels einer Durchflussdesinfektionseinheit (47) desinfiziert wird, wobei die Durchflussdesinfektionseinheit (47) deaktiviert wird, wenn in dem Wasserreservoir (7) vorgehaltenes Wasser auf die Desinfektionstemperatur erwärmt wird.

15. Flugzeug (59) mit einem System (1) nach einem der Ansprüche 1 bis 7.

## Claims

1. System (1) for heating up water for a consumer unit (3, 5) in an aircraft (59), the system comprising a water reservoir (7) and a control unit (9),
the water reservoir (7) comprising a heating device (11) configured to heat water (13) held in the water reservoir (7) to a consumer temperature, such that water can be provided at the consumer temperature from the water reservoir (7) to the consumer unit (3, 5) for immediate use, and
the control unit (9) being configured to control the heating device (11) such that water held in the water reservoir (7) is automatically heated to or above a disinfection temperature at which germ formation in the water reservoir (7) and on its internal surfaces (8) is eliminated or suppressed by thermal treatment, and a temperature of the water in the water reservoir (7) is maintained at or above the disinfection temperature for a disinfection period, the heating to the disinfection temperature being effected only during flight phases or portions of flight phases of the aircraft (59) during which use of the consumer unit (3, 5) by a user is not to be expected.

2. System (1) according to Claim 1, the control unit (9) being configured to be connected to a data bus (45) of the aircraft (59) and to receive from the data bus (45) the current flight phase of the aircraft (59).

3. System (1) according to Claim 1 or 2, comprising a consumer unit (3, 5) having a consumer valve (31), opening of the consumer valve (31) enabling water to be drawn from the water reservoir (7),
the control unit (9) being configured to control an opening of the consumer valve (31) in such a manner that water (13) from the water reservoir (7), heated to disinfection temperature, is drawn from the water reservoir (7) through the consumer valve (31), such that water can be provided at the consumer temperature from the water reservoir (7) as soon as use of the consumer unit (3, 5) by a user is to be expected.

4. System (1) according to Claim 1 or 2, comprising an infeed valve (27) and an overflow (41), opening of the infeed valve (27) enabling water to be replenished from a central water tank into the water reservoir (7), and water (13) being able to flow out of the water reservoir (7) via the overflow,
the control unit (9) being configured to control the opening of the infeed valve (27) in such a manner that water from the water reservoir (7), heated to disinfection temperature, flows out of the water reservoir (7) through the overflow (41), such that water can be provided at the consumer temperature from the water reservoir (7) as soon as use of the consumer unit (7) by a user is to be expected.

5. System (1) according to any one of Claims 1 to 4, the control unit (9) being furthermore configured to heat water (13) in the water reservoir (7) to disinfection temperature only when one or more cabin data assume predetermined values.

6. System (1) according to Claim 5, the consumer unit (3) being a washbasin (5) or a shower in a washroom, and the one or more cabin data being a usage status of the washroom and/or a status of a presence sensor that senses a presence of a person in the washroom.

7. System (1) according to any one of Claims 1 to 6, the system (1) furthermore comprising a flow disinfection unit (47) that is configured to disinfect water flowing out of the water reservoir,
the control unit (9) being configured to deactivate the flow disinfection unit (47) when water (13) held in the water reservoir (7) is heated to the disinfection temperature.

8. Method for heating up water for a consumer unit (3, 5) in an aircraft (59) that comprises a water reservoir (7),
the water reservoir (7) comprising a heating device (1) by which water (13) held in the water reservoir (7) is heated to a consumer temperature, such that water is provided at the consumer temperature from the water reservoir (7) to the consumer unit (3, 5) for immediate use, and
water (13) held in the water reservoir (7) being automatically heated to a disinfection temperature, and a temperature of the water being maintained in the water reservoir (7) for a disinfection period at or above the disinfection temperature at which germ formation in the water reservoir (7) and on its internal surfaces (8) is eliminated or suppressed by thermal treatment, the water contained in the water reservoir (7) being heated to the disinfection temperature only during flight phases or portions of flight phases of the aircraft (59) during which use of the consumer unit (3, 5) by a user is not to be expected.

9. Method according to Claim 8, a current flight phase of the aircraft (59) being obtained from a data bus (45) of the aircraft (59).

10. Method according to Claim 8 or 9, opening of a consumer valve (31) enabling water to be drawn from the water reservoir (7), and the consumer valve (31) being opened in such a manner that water (13) from the water reservoir (7), heated to disinfection temperature, is drawn from the water reservoir (7) through the consumer valve (31), such that water can be provided at the consumer temperature from the water reservoir (7) as soon as use of the consumer unit (3, 5) by a user is to be expected.

11. Method according to Claim 8 or 9, opening of an infeed valve (27) enabling water to be replenished from a central water tank into the water reservoir (7) and water being able to flow out of the water reservoir via an overflow (41),
the infeed valve (27) being opened in such a manner that water (13) from the water reservoir (7), heated to disinfection temperature, flows out of the water reservoir (7) through the overflow (41), such that water can be provided at the consumer temperature from the water reservoir (7) as soon as use of the consumer unit (3, 5) by a user is to be expected.

12. Method according to any one of Claims 8 to 11, water in the water reservoir (7) being heated to disinfection temperature only when one or more cabin data assume predetermined values.

13. Method according to Claim 12, the consumer unit (3) being a washbasin (5) or a shower in a washroom, and the one or more cabin data being a usage status of the washroom and/or a status of a presence sensor that senses a presence of a person in the washroom.

14. Method according to any one of Claims 8 to 13, water flowing out of the water reservoir (7) being disinfected by means of a flow disinfection unit (47), the flow disinfection unit (47) being deactivated when water held in the water reservoir (7) is heated to the disinfection temperature.

15. Aircraft (59) having a system (1) according to any one of Claims 1 to 7.

## Revendications

1. Système (1) de chauffage de l'eau destinée à une unité de consommation (3, 5) située dans un avion (59), le système comprenant un réservoir d'eau (7) et une unité de commande (9),
le réservoir d'eau (7) comprenant un appareil de chauffage (11) qui est conçu pour chauffer l'eau (13), contenue dans le réservoir d'eau (7), à une température de consommation, de sorte que, à partir du réservoir d'eau (7) destinée à l'unité de consommation (3, 5), l'eau puisse être mise à disposition à la température de consommation pour une utilisation immédiate, et
l'unité de commande (9) étant conçue pour commander l'appareil de chauffage (11) de telle sorte que l'eau, contenue dans le réservoir d'eau (7), soit automatiquement chauffée jusqu'à une température de désinfection, ou au-dessus, à laquelle la formation de germes dans le réservoir d'eau (7) et sur les surfaces intérieures (8) de celui-ci est atténuée ou éliminée par traitement thermique, et une température de l'eau dans le réservoir d'eau (7) soit maintenue à la température de désinfection, ou au-dessus, pendant une période de désinfection, le chauffage à la température de désinfection n'étant effectué que pendant des phases de vol ou des parties de phases de vol de l'avion (59) dans lesquelles l'utilisation de l'unité de consommation (3, 5) par un utilisateur n'est pas attendue.

2. Système (1) selon la revendication 1, l'unité de commande (9) étant conçue pour être reliée à un bus de données (45) de l'avion (59) et recevoir du bus de données (45) la phase de vol instantanée de l'avion (59) .

3. Système (1) selon la revendication 1 ou 2 comprenant une unité de consommation (3, 5) pourvue d'une vanne de consommation (31), l'eau pouvant être retirée du réservoir d'eau (7) par ouverture de la vanne de consommation (31),
l'unité de commande (9) étant conçue pour commander une ouverture de la vanne de consommation (31) de manière à ce que l'eau (13), chauffée à la température de désinfection et provenant du réservoir d'eau (7), soit prise sur du réservoir d'eau (7) par le biais de la vanne de consommation (31) de sorte que l'eau puisse être fournie à partir du réservoir d'eau (7) à la température de consommation, dès qu'une utilisation de l'unité de consommation (3, 5) par un utilisateur est attendue.

4. Système (1) selon la revendication 1 ou 2 comprenant une vanne d'entrée (27) et un trop-plein (41), l'eau pouvant être ramenée d'un réservoir d'eau central dans le réservoir d'eau (7) par ouverture de la vanne d'entrée (27) et l'eau (13) pouvant s'écouler du réservoir d'eau (7) par le biais du trop-plein,
l'unité de commande (9) étant conçue pour commander l'ouverture de la vanne d'entrée (27) de manière à ce que l'eau chauffée à la température de désinfection et provenant du réservoir d'eau (7) s'écoule hors du réservoir d'eau (7) par le biais du trop-plein (41), de sorte que l'eau provenant du réservoir d'eau (7) puisse être fournie à la température de consommation dès qu'une utilisation de l'unité de consommation (7) par un utilisateur est attendue.

5. Système (1) selon l'une des revendications 1 à 4, l'unité de commande (9) étant en outre conçue pour chauffer l'eau (13) dans le réservoir d'eau (7) à une température de désinfection uniquement lorsqu'une ou plusieurs données de cabine prennent des valeurs prédéterminées.

6. Système (1) selon la revendication 5, l'unité de consommation (3) étant un lavabo (5) ou une douche dans un cabinet de toilette et les une ou plusieurs données de cabine comprenant un état d'utilisation du cabinet de toilette et/ou un état d'un capteur de présence qui détecte la présence d'une personne dans le cabinet de toilette.

7. Système (1) selon l'une des revendications 1 à 6, le système (1) comprenant en outre une unité de désinfection à écoulement continu (47) qui est conçue pour désinfecter l'eau s'écoulant hors du réservoir d'eau,
l'unité de commande (9) étant conçue pour désactiver l'unité de désinfection à écoulement continu (47) lorsque l'eau (13) contenue dans le réservoir d'eau (7) est chauffée à la température de désinfection.

8. Procédé de chauffage de l'eau destinée à une unité de consommation (3, 5) située dans un avion (59) comprenant un réservoir d'eau (7),
le réservoir d'eau (7) comprenant un appareil de chauffage (1) avec lequel l'eau (13), contenue dans le réservoir d'eau (7), est chauffée à une température de consommation, de sorte que l'eau soit fournie du réservoir d'eau (7) à l'unité de consommation (3, 5) à la température de consommation pour une utilisation immédiate, et
l'eau (13), contenue dans le réservoir d'eau (7), étant chauffée automatiquement à une température de désinfection et une température de l'eau dans le réservoir d'eau (7) étant maintenue à la température de désinfection, ou au-dessus, pendant une période de désinfection, pendant laquelle la formation de germes dans le réservoir d'eau (7) et sur les surfaces intérieures (8) de celui-ci est atténuée ou éliminé par traitement thermique, l'eau contenue dans le réservoir d'eau (7) étant chauffée à la température de désinfection uniquement pendant les phases de vol ou des parties de phases de vol de l'avion (59) dans lesquelles l'utilisation de l'unité de consommation (3, 5) par un utilisateur n'est pas attendue.

9. Procédé selon la revendication 8, une phase de vol actuelle de l'avion (59) étant obtenue à partir d'un bus de données (45) de l'avion (59).

10. Procédé selon la revendication 8 ou 9, l'eau pouvant être prise sur un réservoir d'eau (7) par ouverture d'une vanne de consommation (31) et la vanne de consommation (31) étant ouverte de manière à ce que l'eau (13) chauffée à la température de désinfection et provenant du réservoir d'eau (7) soit prise sur le réservoir d'eau (7) par le biais de la vanne de consommation (31), de sorte que l'eau provenant du réservoir d'eau (7) puisse être fournie à la température de consommation dès qu'une utilisation de l'unité de consommation (3, 5) par un utilisateur est attendue.

11. Procédé selon la revendication 8 ou 9, l'eau pouvant être ramenée d'un réservoir d'eau central dans le réservoir d'eau (7) par ouverture d'une vanne d'entrée (27) et l'eau pouvant s'écouler hors du réservoir d'eau par le biais d'un trop-plein (41),
la vanne d'entrée (27) étant ouverte de manière à ce que l'eau (13) chauffée à la température de désinfection et provenant du réservoir d'eau (7) s'écoule hors du réservoir d'eau (7) par le biais du trop-plein (41), de sorte que l'eau provenant du réservoir d'eau (7) soit fournie à la température de consommation, dès qu'une utilisation de l'unité de consommation (3.5) par un utilisateur est attendue.

12. Procédé selon l'une des revendications 8 à 11, l'eau dans le réservoir d'eau (7) étant chauffée à la température de désinfection uniquement lorsque les une ou plusieurs données de cabine prennent des valeurs prédéterminées.

13. Procédé selon la revendication 12, l'unité de consommation (3) étant un lavabo (5) ou une douche dans un cabinet de toilette et les une ou plusieurs données de cabine comprenant un état d'utilisation du cabinet de toilette et/ou un état d'un capteur de présence qui détecte la présence d'une personne dans le cabinet de toilette.

14. Procédé selon l'une des revendications 8 à 13, l'eau s'écoulant du réservoir d'eau (7) étant désinfectée au moyen d'une unité de désinfection à écoulement continu (47), l'unité de désinfection à écoulement continu (47) étant désactivée lorsque l'eau contenue dans le réservoir d'eau (7) est chauffée à la température de désinfection.

15. Avion (59) comprenant un système (1) selon l'une des revendications 1 à 7.
